(19) Europäisches Patentamt
European Patent Office
Office européen des brevets

(11) **EP 3 223 417 B1**

(12) **EUROPEAN PATENT SPECIFICATION**

(45) Date of publication and mention
of the grant of the patent:
**21.07.2021 Bulletin 2021/29**

(21) Application number: **15861407.3**

(22) Date of filing: **30.04.2015**

(51) Int Cl.:
*H02M 3/155* (2006.01)   *H02M 1/14* (2006.01)
*H02J 7/35* (2006.01)

(86) International application number:
**PCT/CN2015/078054**

(87) International publication number:
**WO 2016/078350 (26.05.2016 Gazette 2016/21)**

(54) **THREE-PORT CONVERTOR HAVING INTEGRATED MAGNETIC AND ZERO-PORT CURRENT RIPPLE**

DREI-PORT-UMWANDLER MIT INTEGRIERTER MAGNETISCHER UND NULL-PORT-STROMWELLIGKEIT

CONVERTISSEUR À TROIS PORTS COMPORTANT UN ÉLÉMENT MAGNÉTIQUE INTÉGRÉ ET PRÉSENTANT UNE ONDULATION DE COURANT DE PORT NULLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2014 CN 201410677018**

(43) Date of publication of application:
**27.09.2017 Bulletin 2017/39**

(73) Proprietor: **Shenzhen Aerospace New Power Technology Ltd.**
**Shenzhen, Guangdong 518000 (CN)**

(72) Inventors:
• ZHU, Hongyu
  Shenzhen
  Guangdong 518000 (CN)
• ZHANG, Donglai
  Shenzhen
  Guangdong 518000 (CN)
• ZHU, Jiwei
  Shenzhen
  Guangdong 518000 (CN)
• ZHANG, Bowen
  Shenzhen
  Guangdong 518000 (CN)

(74) Representative: **Proi World Intellectual Property GmbH**
**Obermattweg 12**
**6052 Hergiswil, Kanton Nidwalden (CH)**

(56) References cited:
**CN-A- 103 199 704      CN-A- 103 199 704**
**CN-A- 103 384 115      CN-A- 104 518 672**
**US-A1- 2005 243 579**

• **YEN-MO CHEN ET AL: "A High Step-Up Three-Port DC DC Converter for Stand-Alone PV/Battery Power Systems", IEEE TRANSACTIONS ON POWER ELECTRONICS, INSTITUTE OF ELECTRICAL AND ELECTRONICS ENGINEERS, USA, vol. 28, no. 11, 1 November 2013 (2013-11-01), pages 5049-5062, XP011507709, ISSN: 0885-8993, DOI: 10.1109/TPEL.2013.2242491**
• **TSENG PO-HSIN ET AL: "A novel high step-up three-port converter", 2014 INTERNATIONAL POWER ELECTRONICS AND APPLICATION CONFERENCE AND EXPOSITION, IEEE, 5 November 2014 (2014-11-05), pages 21-25, XP032734706, DOI: 10.1109/PEAC.2014.7037822 [retrieved on 2015-02-09]**
• **None**

**Description**

BACKGROUND OF THE INVENTION

Technical Field

The present invention relates to a power converter, and in particular, to a three-port converter.

2. Description of Related Art

A solar battery-storage battery direct-current power system generally takes solar energy as an input source, with a storage battery as a backup power source to supply power to a load jointly. Since the power of the input source, the storage battery, and the load needs to be managed simultaneously, two or more converters are generally required to fulfill a system power management task jointly. All the converters are controlled in a distributed manner, the system is large in size and heavy in weight, and multi-stage power conversion exists, leading to lower system efficiency. In the prior art as shown in Fig. 1 (CN 103 199 704 A), a three-port converter is typically used to substitute a plurality of independent converters to implement the system power management, discrete magnetic elements are used to enable energy flow through the three ports, thereby realizing product application, and the prior art is characterized in that all the ports are mutually isolated through a transformer winding, but it has the following problems and shortcomings:

> 1) an independent magnetic-ring inductor is used, the coupling driving of a transformer is included for a high-side MOS transistor, and magnetic integration technology is not used so that many magnetic elements are present;
> 2) each port has larger input and output ripples, there are also many filter capacitors, and with more devices and large size and weight, more space is occupied and the power density is reduced; and
> 3) the isolation driving of the transformer is insufficient for the switching control of a switching tube.

BRIEF SUMMARY OF THE INVENTION

To solve the problems in the prior art, the present invention provides a three-port converter with magnetic integration and zero port current ripple, which is capable of reducing the number of magnetic rings and the number of driving coupling transformers while reducing the influence of electromagnetic interference so that the amount of current ripples flowing through the three ports is close to zero.

The present invention is implemented with a technical solution as follows:

a three-port converter with magnetic integration and zero port current ripple comprises: an input terminal $V_{sa}$ of a solar battery SA, a busbar terminal $V_{bus}$, a storage battery terminal $V_{bat}$, a superboost circuit of a magnetic-integration magnetic ring, a bidirectional superbuck circuit, and current ripple cancellation branches 1, 2 and 3; the solar battery SA transfers energy to the busbar terminal unidirectionally through the superboost circuit of the magnetic-integration magnetic ring; the superboost circuit of the magnetic-integration magnetic ring comprises an input capacitor $C_{in}$ of the SA, a busbar filter capacitor $C_{bus}$, N-MOSFETs Q1 and Q2, inductors $L_{N8}$, $L_{N4}$ and $L_{N5}$; the storage battery transfers energy to the busbar terminal bidirectionally through the bidirectional superbuck circuit, and the bidirectional superbuck circuit comprises N-MOS transistors Q3 and Q4, a freewheeling inductor $L_{N1}$ of the buck circuit, inductors $L_{N5}$, $L_{N9}$ and $L_{N10}$, and a filter capacitor $C_{bat}$ of the storage battery terminal, wherein the input capacitor $C_{in}$ is connected with a solar battery constant-current source in parallel; the busbar filter capacitor $C_{bus}$ has one terminal connected with a busbar output terminal and has the other terminal grounded; the grid of the N-MOSFET Q1 is connected with a driving circuit 1 through the inductor $L_{N8}$, the dotted terminal of the inductor $L_{N8}$ is connected with the grid of the Q1, the drain of the Q1 is connected with the input terminal of the SA, the source of the Q1 is connected with the dotted terminal of the inductor $L_{N5}$, and the opposite terminal of the $L_{N5}$ is grounded; the source of the Q2 is connected with the input terminal of the SA, the drain of the Q2 is connected with the dotted terminal of the inductor $L_{N4}$, the grid of the Q2 is connected with a driving circuit 2, and the opposite terminal of the inductor $L_{N4}$ is connected with the busbar output terminal; a capacitor C1 has one terminal connected with the dotted terminal of the $L_{N4}$ and the other terminal connected with the dotted terminal of the $L_{N5}$; the filter capacitor $C_{bat}$ of the storage battery terminal is connected with the storage battery in parallel, the drain of the Q3 is connected with the drain of the Q2, the source of the Q3 is connected with the drain of the Q4, the grid of the Q3 is connected with the dotted terminal of the $L_{N10}$, and the opposite terminal of the $L_{N10}$ is connected with a driving circuit 3; the source of the Q4 is connected with the dotted terminal of the $L_{N5}$, the grid of the Q4 is connected with the dotted terminal of the driving inductor $L_{N9}$, and the opposite terminal of the $L_{N9}$ is connected with a driving circuit 4; the source of the Q3 is connected with the dotted terminal of the freewheeling inductor $L_{N1}$ of the buck circuit, and the opposite terminal of the $L_{N1}$ is connected with the input terminal of the storage battery; the inductors $L_{N4}$, $L_{N5}$, $L_{N8}$ and $L_{N9}$ are wound on a magnetic ring 1, the inductors $L_{N1}$ and $L_{N10}$ are wound on the other magnetic ring 2; and the current ripple cancellation branches 1 and 2 are used for cancelling a current ripple at the solar input side, the current ripple cancellation branch 3 is used for cancelling a current ripple at the battery side, and each current ripple cancellation branch is formed by connecting an independent inductor, a winding wound on the magnetic ring and a thin film capacitor in series.

Further, the current ripple cancellation branch 1 consists of inductors L7 and $L_{N7}$ and a capacitor C3, wherein the inductor L7 has one terminal connected with the input terminal of SA and has the other terminal connected with the dotted terminal of the $L_{N7}$, and the opposite terminal of the $L_{N7}$ is grounded through the capacitor C3; the current ripple cancellation branch 2 comprises inductors L2 and $L_{N2}$ and a capacitor C2, wherein the inductor L2 has one terminal connected with the input terminal of the SA and has the other terminal connected with the dotted terminal of the $L_{N2}$, and the opposite terminal of the $L_{N2}$ is grounded through the capacitor C2; and the current ripple cancellation branch 3 comprises inductors L3 and $L_{N3}$ and a capacitor C4, wherein the inductor $L_{N3}$ has an opposite terminal connected with the input terminal of the storage battery and has a dotted terminal connected with one terminal of the inductor L3, the other terminal of the L3 is grounded through the capacitor C4, the $L_{N7}$ is wound on the magnet ring 1, and the $L_{N2}$ and $L_{N3}$ are wound on the magnet ring 2.

The present invention has the following advantageous effects: the three-port converter with magnetic integration and current ripple cancellation provided by the present invention applies to a solar battery and storage battery direct-current power system, an aerospace power system, an aircraft power system and a maritime power system. With an improved structure, the size and weight, the number of filter devices, and the input and output ripples are reduced, and the power density and stability are increased.

BRIEF DESCRIPTION OF THE SEVERAL VIEWS OF THE DRAWINGS

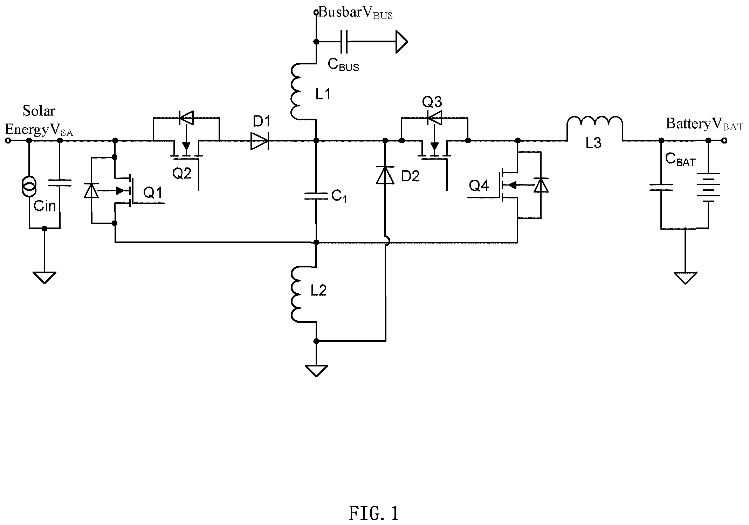

FIG. 1 is a circuit diagram of a three-port converter in the prior art;
FIG. 2 is a circuit diagram of a three-port converter with magnetic integration and zero port current ripple in the present invention; and
FIG. 3 is a simplified circuit diagram of the three-port converter of the present invention.

DETAILED DESCRIPTION OF THE INVENTION

The present invention is further illustrated below in combination with the description of the drawings and the particular embodiments.

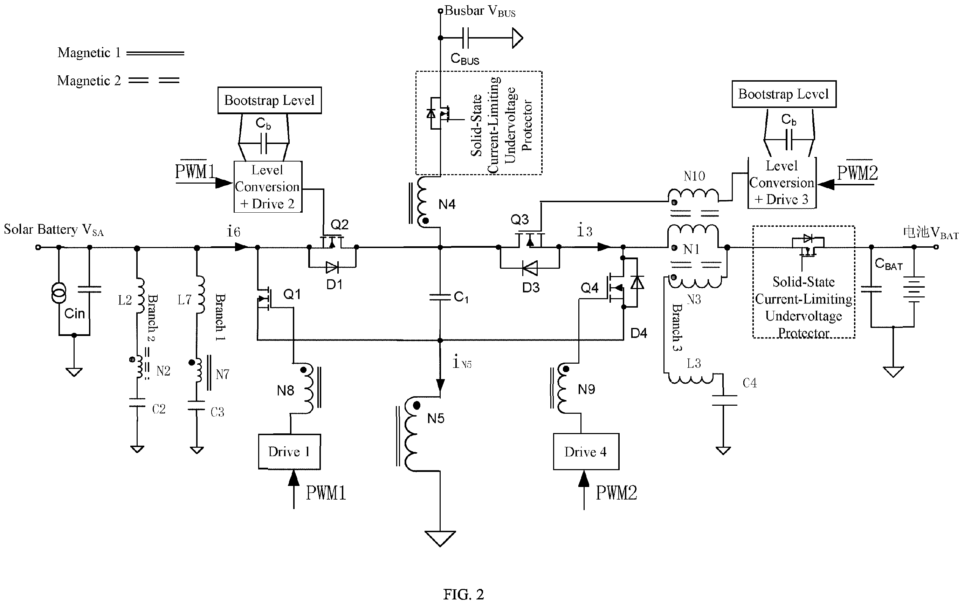

FIG. 2 shows a circuit diagram of a three-port converter with magnetic integration and port current ripple cancellation in the present invention. The converter comprises the input terminal $V_{sa}$ of a solar battery SA, a busbar terminal $V_{bus}$, a storage battery terminal $V_{bat}$, a superboost circuit of a magnetic-integration magnetic ring, a bidirectional superbuck circuit, and current ripple cancellation branches 1, 2 and 3.

The superboost circuit of the magnetic-integration magnetic ring is shown on the left. The solar battery SA transfers energy to the busbar terminal unidirectionally through the superboost circuit of the magnetic-integration magnetic ring; the superboost circuit of the magnetic-integration magnetic ring comprises an input capacitor $C_{in}$ (think film capacitor 15uF) of the SA, a busbar filter capacitor $C_{bus}$ (a capacitor array), N-MOSFETs Q1 and Q2 (Model IRFP90N20D, responsible for boosting), inductors $L_{N8}$, $L_{N4}$; the storage battery transfers energy to the busbar terminal bidirectionally through the bidirectional superbuck circuit, and the bidirectional superbuck circuit comprises N-MOS transistors Q3 and Q4 (Model IRFP90N20D), a freewheeling inductor $L_{N1}$ of the buck circuit, inductors $L_{N5}$, $L_{N9}$ and $L_{N10}$, and a filter capacitor $C_{bat}$ (15uF) of the storage battery terminal, wherein the input capacitor $C_{in}$ is connected with a solar battery constant-current source in parallel; the busbar filter capacitor $C_{bus}$ has one terminal connected with a busbar output terminal and has the other terminal grounded; the grid of the N-MOSFET Q1 is connected with a driving circuit 1 through the inductor $L_{N8}$, the dotted terminal of the inductor $L_{N8}$ is connected with the grid of the Q1, the drain of the Q1 is connected with the input terminal of the SA, the source of the Q1 is connected with the dotted terminal of the inductor $L_{N5}$, and the opposite terminal of the $L_{N5}$ is grounded; the source of the Q2 is connected with the input terminal of the SA, the drain of the Q2 is connected with the dotted terminal of the inductor $L_{N4}$, the grid of the Q2 is connected with a driving circuit 2, and the opposite terminal of the inductor $L_{N4}$ is connected with a busbar output terminal; a capacitor C1 has one terminal connected with the dotted terminal of the $L_{N4}$ and the other terminal connected with the dotted terminal of the $L_{N5}$; the filter capacitor $C_{bat}$ of the storage battery terminal is connected with the storage battery in parallel, the drain of the Q3 is connected with the drain of the Q2, the source of the Q3 is connected with the drain of the Q4, the grid of the Q3 is connected with the dotted terminal of $L_{N10}$, and the opposite terminal of the $L_{N10}$ is connected with a driving circuit 3; the source of the Q4 is connected with the dotted terminal of the $L_{N5}$, the grid of the Q4 is connected with the dotted terminal of the driving inductor $L_{N9}$, and the opposite terminal of the $L_{N9}$ is connected with a driving circuit 4; the source of the Q3 is connected with the dotted terminal of the freewheeling inductor $L_{N1}$ of the buck circuit, and the opposite terminal of the $L_{N1}$ is connected with the input terminal of the storage battery; and the current ripple cancellation branches 1 and 2 are used for cancelling the current ripple at the solar input side, the current ripple cancellation branch 3 is used for cancelling the current ripple at the battery side, and each current ripple cancellation branch is formed by connecting an independent inductor, a winding wound on the magnetic ring and a thin film capacitor in series.

The current ripple cancellation branch 1 consists of inductors L7 and $L_{N7}$ and a capacitor C3, wherein the inductor L7 has one terminal connected with the input terminal of SA and has the other terminal connected with the dotted terminal of the $L_{N7}$, and the opposite terminal of the $L_{N7}$ is grounded through the capacitor C3; the current ripple cancellation branch 2 comprises inductors L2 and $L_{N2}$ and a capacitor C2, wherein the inductor L2 has one terminal connected with the input terminal of the SA and has the other terminal connected with the dotted terminal of the $L_{N2}$, and the opposite terminal of the $L_{N2}$ is grounded through the capacitor C2; and the current ripple cancellation branch 3 comprises inductors L3 and $L_{N3}$ and a capacitor C4, wherein the inductor $L_{N3}$ has an opposite terminal connected with the input terminal of the storage battery and has a dotted terminal connected with one terminal of the inductor L3, the other terminal of L3 is grounded through the capacitor C4, the inductors $L_{N4}$, $L_{N5}$, $L_{N7}$, $L_{N8}$ and $L_{N9}$ are wound on the magnet ring 1, and the $L_{N1}$, $L_{N2}$, $L_{N3}$ and $L_{N10}$ are wound on the magnet ring 2.

A solid-state current-limiting undervoltage protector is provided between the opposite terminal of the inductor $L_{N4}$ and the busbar output terminal, and a solid-state current-limiting undervoltage protector is also provided between the opposite terminal of the inductor $L_{N1}$ and the battery terminal.

The solid-state current-limiting undervoltage protector consists of an N-MOSFET and a diode, and the diode has a positive electrode connected with the source of the N-MOSFET, and has a negative electrode connected with the drain of N-MOSFET.

Diodes are provided between the sources and drains of the Q2, Q3 and Q4, and the diodes have positive electrodes connected with the sources and negative electrodes connected with the drains.

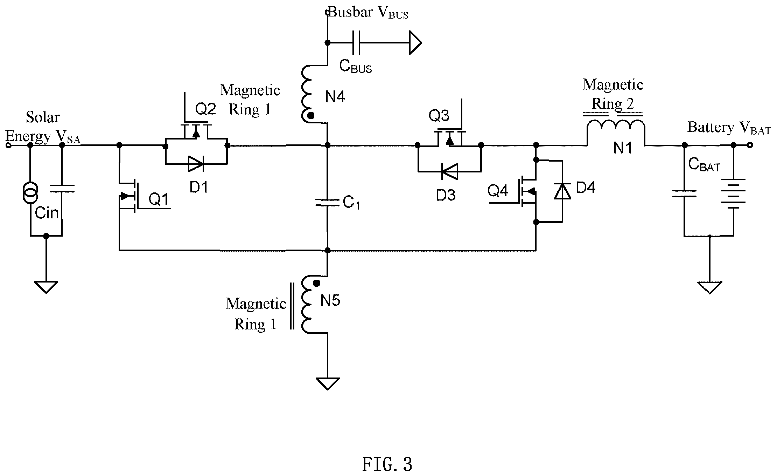

FIG. 3 is a simplified circuit diagram of the three-port converter of the present invention, where Q1 and Q2 are complementary in signal, and Q3 and Q4 are complementary in signal. Q3 and Q4 are conducted complementarily, Q3 is used to fulfill a buck function when the battery is charged, and Q4 is used to fulfill a boost function when the battery discharges; and $C_{bus}$ and a load form the superboost circuit, with

$$V_{bus} = \frac{V_{SA}}{1 - \alpha_1}$$

($\alpha_1$ indicates a duty cycle). When the circuit works normally, a voltage on the capacitor C1 is always equal to a busbar voltage $V_{bus}$, i.e. $V_{C1} = V_{bus}$.

For the three-port converter with magnetic integration and current ripple cancellation of the present invention, the number of magnetic rings is reduced (by jointly winding the inductors L1 and L2 on one upper magnetic ring, thereby eliminating one magnetic ring of the same size), and the number of the driving coupling transformers is also reduced (by omitting two-transformer coupling drivers), thereby greatly reducing the size and weight of the whole converter, so that the amount of current ripples flowing through the three ports is very low and close to zero. The three-port converter of the present invention reduces the influence of electromagnetic interference and simultaneously saves the filter cost so that the busbar current and battery current are smoother.

The above is to further illustrate the present invention in detail in combination with the particular preferred embodiments, but the particular embodiments of the present invention cannot be deemed to be limited by these illustrations. For those ordinarily skilled in the technical field to which the present invention belongs, a number of simple deductions or substitutions can be made also without departing from the concept of the present invention, and shall be deemed as falling within the protection scope of the appended claims.

## Claims

1. A three-port converter, wherein the three-port converter comprises:

    an input terminal ($V_{SA}$) for a solar battery,
    a busbar terminal ($V_{BUS}$) for a busbar,
    a storage battery terminal ($V_{BAT}$) for a storage battery,
    a boost circuit,
    a bidirectional buck circuit, and
    first, second and third current ripple cancellation branches (Branch 1, Branch 2, Branch 3);
    wherein;
    the boost circuit is configured to transfer energy from the input terminal ($V_{SA}$) for a solar battery to the busbar terminal ($V_{BUS}$) unidirectionally;
    the boost circuit comprises an input capacitor (Cin), a busbar filter capacitor ($C_{BUS}$), a first N-MOSFET (Q1), a second N-MOSFET (Q2), first, second and third boost-circuit inductors ($L_{N4}$, $L_{N5}$, $L_{N8}$);
    the bidirectional buck circuit is configured to transfer energy from the storage battery terminal ($V_{BAT}$) to the busbar terminal ($V_{BUS}$) bidirectionally; and
    the bidirectional buck circuit comprises a first N-MOS transistor (Q3), a second N-MOS transistor (Q4), a freewheeling inductor ($L_{N1}$) of the buck circuit, first and second buck-circuit inductors ($L_{N9}$, $L_{N10}$), and a filter capacitor ($C_{BAT}$), wherein the input capacitor (Cin) is arranged to be connected with a solar battery constant-current source in parallel;
    wherein the busbar filter capacitor ($C_{BUS}$) has one terminal connected with the busbar terminal ($V_{BUS}$)and has the other terminal grounded;
    a gate of the first N-MOSFET (Q1) is connected with a first driving circuit (Drive 1) through the third boost-circuit inductor ($L_{N8}$), a first terminal of the third boost-circuit inductor ($L_{N8}$) is connected with the gate of the first N-MOSFET (Q1), the drain of the first N-MOSFET (Q1) is connected with the input terminal ($V_{SA}$) for the solar battery, the source of the first N-MOSFET (Q1) is connected with a first terminal of the second boost-circuit inductor ($L_{N5}$), and a second terminal of the second boost-circuit inductor (LN5) is grounded;

the source of the second N-MOSFET (Q2) is connected with the input terminal ($V_{SA}$) for the solar battery , the drain of the second N-MOSFET (Q2) is connected with a first terminal of the first boost-circuit inductor ($L_{N4}$), the gate of the second N-MOSFET (Q2) is connected with a second driving circuit (Drive 2), and a second terminal of the first boost-circuit inductor ($L_{N4}$) is connected with the busbar terminal ($V_{BUS}$);

a capacitor ($C_1$) has one terminal connected with the first terminal of the first boost-circuit inductor ($L_{N4}$) and the other terminal connected with the first terminal of the second boost-circuit inductor ($L_{N5}$);

the filter capacitor ($C_{BAT}$) is arranged to be connected with the storage battery in parallel, the drain of the first N-MOS transistor (Q3) is connected with the drain of the second N-MOSFET (Q2), the source of the first N-MOS transistor (Q3) is connected with the drain of the second N-MOS transistor (Q4), the gate of the first N-MOS transistor (Q3) is connected with a first terminal of the second buck-circuit inductor ($L_{N10}$), and a second terminal of the second buck-circuit inductor ($L_{N10}$) is connected with a third driving circuit (Drive 3);

the source of the second N-MOS transistor (Q4) is connected with the first terminal of the second boost-circuit inductor ($L_{N5}$), the gate of the second N-MOS transistor (Q4) is connected with a first terminal of the first buck-circuit inductor ($L_{N9}$), and a second terminal of the first buck-circuit inductor ($L_{N9}$) is connected with a fourth driving circuit (Drive 4);

the source of the first N-MOS transistor (Q3) is connected with a first terminal of the freewheeling inductor ($L_{N1}$) of the buck circuit, and a second terminal of the freewheeling inductor ($L_{N1}$) is connected with the storage battery terminal ($V_{BAT}$);

the first, second and third boost-circuit inductors ($L_{N4}$, $L_{N5}$, $L_{N8}$) and the first buck-circuit inductor ($L_{N9}$) are wound on a first magnetic ring (Magnetic Ring 1), the freewheeling inductor ($L_{N1}$) and the second buck-circuit inductor ($L_{N10}$) are wound on a second magnetic ring (Magnetic Ring 2); and

the first and second current ripple cancellation branches (Branch 1, Branch 2) are configured to cancel the current ripple at the solar input side, the third current ripple cancellation branch (Branch 3) is configured to cancel the current ripples at the battery side, and each current ripple cancellation branch (Branch 1, Branch 2, Branch 3) is formed, respectively, by connecting an independent inductor ($L_{N7}$, L7, $L_{N2}$, L3), a winding wound on the magnetic ring (Magnetic Ring 1, Magnetic Ring 2); and a thin film capacitor (C2, C3, C4) in series.

**2.** The three-port converter according to claim 1, **characterized in that** the first current ripple cancellation branch (Branch 1) consists of a first and a second independent inductor (L7, $L_{N7}$) and the thin film capacitor (C3), wherein a first independent inductor (L7) has one terminal connected with the input terminal ($V_{SA}$) and has the other terminal connected with a first terminal of the second independent inductor ($L_{N7}$), and a second terminal of the second independent inductor ($L_{N7}$) is grounded through the thin film capacitor (C3);

the second current ripple cancellation branch (Branch 2) comprises a first and a second independent inductor (L2, $L_{N2}$) and the thin film capacitor (C2), wherein the first independent inductor (L2) has one terminal connected with the input terminal ($V_{SA}$) and has the other terminal connected with a first terminal of the second independent inductor ($L_{N2}$), and a second terminal of the second independent inductor ($L_{N2}$) is grounded through the thin film capacitor (C2); and

the third current ripple cancellation branch (Branch 3) comprises a first and a second independent inductor (L3, $L_{N3}$) and the thin film capacitor (C4), wherein the first independent inductor ($L_{N3}$) has a second terminal connected with the storage battery terminal ($V_{BAT}$) and a first terminal connected with one terminal of the second independent inductor (L3), the other terminal of the second independent inductor (L3) is grounded through the thin film capacitor (C4), wherein the second independent inductor ($L_{N7}$) of the first current ripple cancellation branch (Branch 1) is wound on the first magnetic ring (Magnetic Ring 1), and the second independent inductor ($L_{N2}$) of the second current ripple cancellation branch (Branch 2) and the second independent inductor $L_{N3}$ of the third current ripple cancellation branch (Branch 3) are wound on the second magnetic ring (Magnetic Ring 2).

**3.** The three-port converter according to claim 2, **characterized in that** the thin film capacitor (C3) of the first current ripple cancellation branch (Branch 1) and the thin film capacitor (C2) of the second current ripple cancellation branch (Branch 2) are combined into one capacitor.

**4.** The three-port converter according to claim 1, **characterized in that** the first N-MOS transistor (Q3) and the second N-MOS transistor (Q4), are complementarily conducted, the first N-MOS transistor (Q3) is configured to fulfill a buck function when the storage battery is charged, and the second N-MOS transistor (Q4) is configured to fulfill a boost function when the storage battery discharges.

5. The three-port converter according to claim 1, **characterized in that** the first N-MOSFET (Q1) and the second N-MOS transistor (Q4) are driven directly by using two windings, and the second N-MOSFET (Q2) and the first N-MOS transistor (Q3) are driven by a high-side driver using a bootstrap circuit, respectively.

6. The three-port converter according to claim 1, **characterized in that** a solid-state current-limiting undervoltage protector is provided between the second terminal of the first boost-circuit inductor ($L_{N4}$) and the busbar terminal ($V_{BUS}$), and a solid-state current-limiting undervoltage protector is also provided between the second terminal of the freewheeling inductor ($L_{N1}$) and the storage battery terminal ($V_{BAT}$).

7. The three-port converter according to claim 6, **characterized in that** the solid-state current-limiting undervoltage protector consists of an N-MOSFET and a diode, and the diode has a positive electrode connected with the source of the N-MOSFET, and has a negative electrode connected with the drain of the N-MOSFET.

8. The three-port converter according to claim 1, **characterized in that** diodes are provided between the sources and drains of the second N-MOSFET (Q2), the first N-MOS transistor (Q3) and the second N-MOS transistor (Q4), and the diodes have positive electrodes connected with the sources and have negative electrodes connected with the drains.

**Patentansprüche**

1. Dreitor-Wandler, wobei der Dreitor-Wandler umfasst:

   einen Eingangsanschluss ($V_{SA}$) für eine Solarbatterie
   einen Sammelschienenanschluss ($V_{BUS}$) für eine Sammelschiene einen Speicherbatterieanschluss ($V_{BAT}$) für eine Speicherbatterie,
   eine Boost-Schaltung,
   eine bidirektionale Abwärtsschaltung, und
   einen ersten, einen zweiten und einen dritten Stromwelligkeitsunterdrückungszweig (Zweig 1, Zweig 2, Zweig 3); wobei;
   die Boost-Schaltung so konfiguriert ist, dass sie Energie vom Eingangsanschluss ($V_{SA}$) für eine Solarbatterie zum Sammelschienenanschluss ($V_{BUS}$) unidirektional überträgt;

   die Boost-Schaltung einen Eingangskondensator (Cin), einen Sammelschienen-Filterkondensator ($C_{BUS}$), einen ersten N-MOSFET (Q1), einen zweiten N-MOSFET (Q2), eine erste, eine zweite und eine dritte Boost-Schaltkreis-Induktivität ($L_{N4}$, $L_{N5}$, $L_{N8}$) umfasst;
   die bidirektionale Abwärtsschaltung so konfiguriert ist, dass sie Energie von dem Speicherbatterieanschluss ($V_{BAT}$) zu dem Sammelschienenanschluss ($V_{BUS}$) bidirektional überträgt; und
   die bidirektionale Abwärtsschaltung einen ersten N-MOS-Transistor (Q3), einen zweiten N-MOS-Transistor (Q4), eine Freilaufinduktivität ($L_{N1}$) der Abwärtsschaltung, erste und zweite Abwärtsschaltungsinduktivitäten ($L_{N9}$, $L_{N10}$) und einen Filterkondensator ($C_{BAT}$) umfasst
   wobei der Eingangskondensator (Cin) angeordnet ist, um mit einer Solarbatterie-Konstantstromquelle parallel geschaltet zu werden;
   wobei der Sammelschienen-Filterkondensator ($C_{BUS}$) einen Anschluss hat, der mit dem Sammelschienenanschluss ($V_{BUS}$) verbunden ist, und der andere Anschluss geerdet ist;
   ein Gate des ersten N-MOSFET (Q1) über die dritte Boost-Schaltungsinduktivität ($L_{N8}$) mit einer ersten Treiberschaltung (Drive 1) verbunden ist, ein erster Anschluss der dritten Boost-Schaltungsinduktivität ($L_{N8}$) mit dem Gate des ersten N-MOSFET (Q1) verbunden ist, der Drain des ersten N-MOSFET (Q1) mit dem Eingangsanschluss ($V_{SA}$) für die Solarbatterie verbunden ist, die Source des ersten N-MOSFET (Q1) mit einem ersten Anschluss der zweiten Boost-Schaltungsinduktivität ($L_{N5}$) verbunden ist, und ein zweiter Anschluss der zweiten Boost-Schaltungsinduktivität ($L_{N5}$) geerdet ist;
   die Source des zweiten N-MOSFET (Q2) mit dem Eingangsanschluss ($V_{SA}$) für die Solarbatterie verbunden ist, der Drain des zweiten N-MOSFET (Q2) mit einem ersten Anschluss der ersten Boost-Schaltungsinduktivität ($L_{N4}$) verbunden ist, das Gate des zweiten N-MOSFET (Q2) mit einer zweiten Treiberschaltung (Drive 2) verbunden ist, und ein zweiter Anschluss der ersten Boost-Schaltungsinduktivität ($L_{N4}$) mit dem Sammelschienenanschluss ($V_{BUS}$) verbunden ist;
   ein Kondensator ($C_1$) einen Anschluss hat, der mit dem ersten Anschluss der ersten Boost-Schaltungsinduktivität ($L_{N4}$) verbunden ist, und der andere Anschluss mit dem ersten Anschluss der zweiten Boost-Schaltungsinduktivität ($L_{N5}$) verbunden ist;
   der Filterkondensator ($C_{BAT}$) so angeordnet ist, dass er mit der Speicherbatterie parallel geschaltet ist, der Drain des ersten N-MOS-Transistors (Q3) mit dem Drain des zweiten N-MOSFET (Q2) verbunden ist, die Source des ersten N-MOS-Transistors (Q3) mit dem Drain des zweiten N-MOS-Transistors (Q4) verbunden ist, das Gate des ersten N-MOS-Transistors (Q3) mit einem ersten Anschluss der zweiten Abwärtsschaltungsinduktivität ($L_{N10}$) verbunden ist, und ein zweiter Anschluss der zweiten Abwärtsschaltungsinduktivität ($L_{N10}$) mit einer dritten Ansteuerungsschaltung (Drive 3) verbunden ist;

die Source des zweiten N-MOS-Transistors (Q4) mit dem ersten Anschluss der zweiten Abwärtsschaltungsinduktivität ($L_{N5}$) verbunden ist, das Gate des zweiten N-MOS-Transistors (Q4) mit einem ersten Anschluss der ersten Abwärtsschaltungsinduktivität ($L_{N9}$) verbunden ist, und ein zweiter Anschluss der ersten Abwärtsschaltungsinduktivität ($L_{N9}$) mit einer vierten Treiberschaltung (Drive 4) verbunden ist;

die Source des ersten N-MOS-Transistors (Q3) mit einem ersten Anschluss der Freilaufinduktivität ($L_{N1}$) der Abwärtsschaltung verbunden ist, und ein zweiter Anschluss der Freilaufinduktivität ($L_{N1}$) mit dem Speicherbatterieanschluss ($V_{BAT}$) verbunden ist;

die erste, zweite und dritte Boost-Schaltungs-Induktivität ($L_{N4}$, $L_{N5}$, $L_{N8}$) und die erste Abwärtsschaltungsinduktivität ($L_{N9}$) auf einen ersten Magnetring (Magnetring 1) gewickelt sind, die Freilauf-Induktivität ($L_{N1}$) und die zweite Abwärtsschaltungsinduktivität ($L_{N10}$) auf einen zweiten Magnetring (Magnetring 2) gewickelt sind; und

der erste und der zweite Stromwelligkeitskompensationszweig (Zweig 1, Zweig 2) so konfiguriert sind, dass sie die Stromwelligkeit an der Solareingangsseite kompensieren, der dritte Stromwelligkeitskompensationszweig (Zweig 3) so konfiguriert ist, dass er die Stromwelligkeit an der Batterieseite kompensiert, und jeder Stromwelligkeitskompensationszweig (Zweig 1, Zweig 2, Zweig 3) jeweils durch Verbinden in Reihe einer unabhängigen Induktivität ($L_{N7}$, L7, $L_{N2}$, L3), einer auf den Magnetring (Magnetring 1, Magnetring 2) gewickelten Wicklung und einem Dünnschichtkondensator (C2, C3, C4).

2. Dreitor-Wandler nach Anspruch 1, **dadurch gekennzeichnet, dass** der erste Stromwelligkeitsunterdrückungszweig (Zweig 1) aus einer ersten und einer zweiten unabhängigen Induktivität (L7, $L_{N7}$) und dem Dünnfilmkondensator (C3) besteht, wobei ein Anschluss einer ersten unabhängigen Induktivität (L7) mit dem Eingangsanschluss ($V_{SA}$) verbunden ist und ein anderer Anschluss mit einem ersten Anschluss der zweiten unabhängigen Induktivität ($L_{N7}$) verbunden ist, und ein zweiter Anschluss der zweiten unabhängigen Induktivität ($L_{N7}$) über den Dünnfilmkondensator (C3) geerdet ist; der zweite Stromwelligkeitsunterdrückungszweig (Zweig 2) eine erste und eine zweite unabhängige Induktivität (L2, $L_{N2}$) und den Dünnfilmkondensator (C2) umfasst, wobei ein Anschluss der ersten unabhängigen Induktivität (L2) mit dem Eingangsanschluss ($V_{SA}$) verbunden ist und der andere Anschluss mit einem ersten Anschluss der zweiten unabhängigen Induktivität ($L_{N2}$) verbunden ist, und ein zweiter Anschluss der zweiten unabhängigen Induktivität ($L_{N2}$) über den Dünnfilmkondensator (C2) geerdet ist; und der dritte Stromwelligkeitsunterdrückungszweig (Zweig 3) eine erste und eine zweite unabhängige Induktivität (L3, $L_{N3}$) und den Dünnfilmkondensator (C4) umfasst, wobei die erste unabhängige Induktivität ($L_{N3}$) einen zweiten Anschluss, der mit dem Speicherbatterieanschluss ($V_{BAT}$) verbunden ist, und einen ersten Anschluss, der mit einem Anschluss der zweiten unabhängigen Induktivität (L3) verbunden ist, aufweist, wobei der andere Anschluss der zweiten unabhängigen Induktivität (L3) über den Dünnfilmkondensator (C4) geerdet ist, wobei die zweite unabhängige Induktivität ($L_{N7}$) des ersten Stromwelligkeitsunterdrückungszweigs (Zweig 1) auf den ersten Magnetring (Magnetring 1) gewickelt ist, und die zweite unabhängige Induktivität ($L_{N2}$) des zweiten Stromwelligkeitsunterdrückungszweigs (Zweig 2) und die zweite unabhängige Induktivität $L_{N3}$ des dritten Stromwelligkeitsunterdrückungszweigs (Zweig 3) auf den zweiten Magnetring (Magnetring 2) gewickelt sind.

3. Dreitor-Umrichter nach Anspruch 2, **dadurch gekennzeichnet, dass** der Dünnschichtkondensator (C3) des ersten Stromwelligkeitsunterdrückungszweigs (Zweig 1) und der Dünnschichtkondensator (C2) des zweiten Stromwelligkeitsunterdrückungszweigs (Zweig 2) zu einem Kondensator zusammengefasst sind.

4. Dreitor-Wandler nach Anspruch 1, **dadurch gekennzeichnet, dass** der erste N-MOS-Transistor (Q3) und der zweite N-MOS-Transistor (Q4) komplementär geschaltet sind, der erste N-MOS-Transistor (Q3) so konfiguriert ist, dass er eine Abwärtsfunktion erfüllt, wenn die Speicherbatterie geladen wird, und der zweite N-MOS-Transistor (Q4) so konfiguriert ist, dass er eine Aufwärtsfunktion erfüllt, wenn die Speicherbatterie entladen wird.

5. Dreitor-Wandler nach Anspruch 1, **dadurch gekennzeichnet, dass** der erste N-MOSFET (Q1) und der zweite N-MOS-Transistor (Q4) unter Verwendung von zwei Wicklungen direkt angesteuert werden, und der zweite N-MOSFET (Q2) und der erste N-MOS-Transistor (Q3) von einem High-Side-Treiber unter Verwendung einer Bootstrap-Schaltung angesteuert werden.

6. Dreitor-Wandler nach Anspruch 1, **dadurch gekennzeichnet, dass** zwischen dem zweiten Anschluss der ersten Boost-Schaltungs-Induktivität ($L_{N4}$) und der Sammelschienen-Klemme ($V_{BUS}$) ein Festkörper-Strombegrenzungs-Unterspannungsschutzgerät vorgesehen ist, und zwischen dem zweiten Anschluss der Freilauf-Induktivität ($L_{N1}$) und der Speicherbatterie-Klemme ($V_{BAT}$) ebenfalls ein Festkörper-Strombegrenzungs-Unterspannungsschutzgerät vorgesehen ist.

7. Dreitor-Wandler nach Anspruch 6, **dadurch gekennzeichnet, dass** das Festkörper-Strombegrenzungs-Unterspannungsschutzgerät aus einem N-MOSFET und einer Diode besteht, und die Diode eine positive Elektrode hat, die mit der Source des N-MOSFET verbunden ist, und eine negative Elektrode hat, die mit dem Drain des N-MOSFET verbunden ist.

8. Dreitor-Wandler nach Anspruch 1, **dadurch gekennzeichnet, dass** Dioden zwischen den Source-Anschlüsse und Drain-Anschlüssen des zweiten N-MOSFETs (Q2), des ersten N-MOS-Transistors (Q3) und des zweiten N-MOS-Transistors (Q4) vorgesehen sind, und die Dioden positive Elektroden haben, die mit den Source-Anschlüssen verbunden sind, und negative Elektroden haben, die mit den Drain-Anschlüssen verbunden sind.

## Revendications

1. Un convertisseur à trois ports, dans lequel le convertisseur à trois ports comprend :

   une borne d'entrée ($V_{SA}$) pour une batterie solaire,
   une borne de barre omnibus ($V_{BUS}$) pour une barre omnibus,
   une borne de batterie de stockage ($V_{BAT}$) pour une batterie de stockage,
   un circuit survolteur,
   un circuit buck bidirectionnel, et
   des première, deuxième et troisième branches d'annulation d'ondulation de courant (Branche 1, Branche 2, Branche 3) ; dans lequel ;
   le circuit survolteur est configuré pour transférer de l'énergie de la borne d'entrée ($V_{SA}$) pour une batterie solaire à la borne de barre omnibus ($V_{BUS}$) de manière unidirectionnelle ;
   le circuit survolteur comprend un condensateur d'entrée (Cin), un condensateur de filtrage de barre omnibus ($C_{BUS}$), un premier N-MOSFET (Q1), un deuxième N-MOSFET (Q2), des première, deuxième et troisième inductances de circuit survolteur ($L_{N4}$, $L_{N5}$, $L_{N8}$) ;
   le circuit bouchon bidirectionnel est configuré pour transférer de l'énergie de la borne de la batterie d'accumulateurs ($V_{BAT}$) à la borne du jeu de barres ($V_{BUS}$) de manière bidirectionnelle ; et
   le circuit buck bidirectionnel comprend un premier transistor N-MOS (Q3), un second transistor N-MOS (Q4), une inductance de roue libre ($L_{N1}$) du circuit buck, des première et seconde inductances de circuit buck ($L_{N9}$, $L_{N10}$), et un condensateur de filtrage ($C_{BAT}$), dans lequel le condensateur d'entrée (Cin) est agencé pour être connecté à une source de courant constant de batterie solaire en parallèle ;
   dans lequel le condensateur de filtre de barre omnibus ($C_{BUS}$) a une borne connectée à la borne de barre omnibus ($V_{BUS}$) et a l'autre borne mise à la terre ;
   une grille du premier N-MOSFET (Q1) est connectée à un premier circuit d'attaque (Drive 1) par l'intermédiaire de la troisième inductance de circuit d'amplification ($L_{N8}$), une première borne de la troisième inductance de circuit d'amplification (LN8) est connectée à la grille du premier N-MOSFET (Q1), le drain du premier N-MOSFET (Q1) est connecté à la borne d'entrée ($V_{SA}$) de la batterie solaire, la source du premier N-MOSFET (Q1) est connectée à une première borne de la deuxième inductance de circuit d'amplification ($L_{N5}$), et une deuxième borne de la deuxième inductance de circuit d'amplification ($L_{N5}$) est mise à la terre ;
   la source du second N-MOSFET (Q2) est connectée à la borne d'entrée ($V_{SA}$) pour la batterie solaire, le drain du second N-MOSFET (Q2) est connecté à une première borne de la première inductance de circuit d'amplification ($L_{N4}$), la grille du second N-MOSFET (Q2) est connectée à un second circuit d'attaque (Drive 2), et une seconde borne de la première inductance de circuit d'amplification ($L_{N4}$) est connectée à la borne de barre omnibus ($V_{BUS}$) ;
   un condensateur ($C_1$) a une borne connectée à la première borne de la première inductance de circuit d'amplification ($L_{N4}$) et l'autre borne connectée à la première borne de la seconde inductance de circuit d'amplification ($L_{N5}$) ;
   le condensateur de filtrage ($C_{BAT}$) est disposé pour être connecté à la batterie d'accumulateurs en parallèle, le drain du premier transistor N-MOS (Q3) est connecté au drain du second transistor N-MOSFET (Q2), la source du premier transistor N-MOS (Q3) est connectée au drain du second transistor N-MOS (Q4), la grille du premier transistor N-MOS (Q3) est connectée à une première borne de la deuxième inductance de circuit buck ($L_{N10}$), et une deuxième borne de la deuxième inductance de circuit buck ($L_{N10}$) est connectée à un troisième circuit d'attaque (Drive 3) ;

la source du deuxième transistor N-MOS (Q4) est connectée à la première borne de la deuxième inductance de circuit d'amplification ($L_{N5}$), la grille du deuxième transistor N-MOS (Q4) est connectée à une première borne de la première inductance de circuit d'amplification ($L_{N9}$), et une deuxième borne de la première inductance de circuit d'amplification (LN9) est connectée à un quatrième circuit de commande (commande 4) ;

la source du premier transistor N-MOS (Q3) est connectée à une première borne de l'inductance de roue libre ($L_{N1}$) du circuit buck, et une seconde borne de l'inductance de roue libre ($L_{N1}$) est connectée à la borne de la batterie de stockage ($V_{BAT}$) ;

les première, deuxième et troisième inductances de circuit survolteur ($L_{N4}$, $L_{N5}$, $L_{N8}$) et la première inductance de circuit bouchon ($L_{N9}$) sont enroulées sur un premier anneau magnétique (anneau magnétique 1), l'inductance de roue libre ($L_{N1}$) et la deuxième inductance de circuit bouchon ($L_{N10}$) sont enroulées sur un deuxième anneau magnétique (anneau magnétique 2) ; et

les première et deuxième branches d'annulation d'ondulation de courant (branche 1, branche 2) sont configurées pour annuler l'ondulation de courant du côté de l'entrée solaire, la troisième branche d'annulation d'ondulation de courant (branche 3) est configurée pour annuler les ondulations de courant du côté de la batterie, et chaque branche d'annulation d'ondulation de courant (branche 1, branche 2, branche 3) est formée, respectivement, en connectant une inductance indépendante ($L_{N7}$, L7, $L_{N2}$, L3), un enroulement enroulé sur l'anneau magnétique (anneau magnétique 1, anneau magnétique 2) ; et un condensateur à couche mince (C2, C3, C4) en série.

2. Convertisseur à trois ports selon la revendication 1, **caractérisé en ce que** la première branche d'annulation d'ondulation de courant (branche 1) est constituée d'une première et d'une seconde inductance indépendante (L7, $L_{N7}$) et du condensateur à couches minces (C3), dans laquelle une première inductance indépendante (L7) a une borne connectée à la borne d'entrée ($V_{SA}$) et a l'autre borne connectée à une première borne de la seconde inductance indépendante ($L_{N7}$), et une seconde borne de la seconde inductance indépendante ($L_{N7}$) est mise à la masse par l'intermédiaire du condensateur à couches minces (C3) ;

la deuxième branche d'annulation d'ondulation de courant (branche 2) comprend une première et une deuxième inductance indépendante (L2, $L_{N2}$) et le condensateur à couche mince (C2), dans laquelle la première inductance indépendante (L2) a une borne connectée à la borne d'entrée ($V_{SA}$) et a l'autre borne connectée à une première borne de la deuxième inductance indépendante ($L_{N2}$), et une deuxième borne de la deuxième inductance indépendante ($L_{N2}$) est mise à la terre par l'intermédiaire du condensateur à couche mince (C2) ; et

la troisième branche d'annulation d'ondulation de courant (branche 3) comprend une première et une deuxième inductance indépendante (L3, $L_{N3}$) et le condensateur à couches minces (C4), dans laquelle la première inductance indépendante ($L_{N3}$) a une deuxième borne connectée à la borne de la batterie d'accumulateurs ($V_{BAT}$) et une première borne connectée à une borne de la deuxième inductance indépendante (L3), l'autre borne de la deuxième inductance indépendante (L3) est mise à la terre par le condensateur à couches minces (C4), dans lequel la deuxième inductance indépendante ($L_{N7}$) de la première branche d'annulation d'ondulation de courant (branche 1) est enroulée sur le premier anneau magnétique (anneau magnétique 1), et la deuxième inductance indépendante ($L_{N2}$) de la deuxième branche d'annulation d'ondulation de courant (branche 2) et la deuxième inductance indépendante $L_{N3}$ de la troisième branche d'annulation d'ondulation de courant (branche 3) sont enroulées sur le deuxième anneau magnétique (anneau magnétique 2).

3. Convertisseur à trois ports selon la revendication 2, **caractérisé en ce que** le condensateur à couche mince (C3) de la première branche d'annulation d'ondulation de courant (Branche 1) et le condensateur à couche mince (C2) de la deuxième branche d'annulation d'ondulation de courant (Branche 2) sont combinés en un seul condensateur.

4. Convertisseur à trois ports selon la revendication 1, **caractérisé en ce que** le premier transistor N-MOS (Q3) et le second transistor N-MOS (Q4) sont conduits de manière complémentaire, le premier transistor N-MOS (Q3) est configuré pour remplir une fonction de compensation lorsque la batterie d'accumulateurs est chargée, et le second transistor N-MOS (Q4) est configuré pour remplir une fonction d'amplification lorsque la batterie d'accumulateurs se décharge.

5. Convertisseur à trois ports selon la revendication 1, **caractérisé en ce que** le premier transistor N-MOSFET (Q1) et le second transistor N-MOS (Q4) sont commandés directement en utilisant deux enroulements, et le second transistor N-MOSFET (Q2) et le premier transistor N-MOS (Q3) sont commandés par un pilote côté haut en utilisant un circuit d'amorçage, respectivement.

6. Convertisseur à trois ports selon la revendication 1, **caractérisé en ce qu'**un protecteur de sous-tension de limitation de courant à l'état solide est prévu entre la seconde borne de la première inductance de circuit d'amplification ($L_{N4}$) et la borne de barre omnibus ($V_{BUS}$), et un protecteur de sous-tension de limitation de courant à l'état solide est également prévu entre la seconde borne de l'inductance de roue libre ($L_{N1}$) et la borne de la batterie d'accumulateurs ($V_{BAT}$).

7. Convertisseur à trois ports selon la revendication 6, **caractérisé en ce que** le protecteur de sous-tension de limitation de courant à l'état solide consiste en un N-MOSFET et une diode, et la diode a une électrode positive connectée à la source du N-MOSFET, et a une électrode négative connectée au drain du N-MOSFET.

8. Convertisseur à trois ports selon la revendication 1, **caractérisé en ce que** des diodes sont prévues entre les sources et les drains du deuxième N-MOSFET ($Q2$), du premier transistor N-MOS ($Q3$) et du deuxième transistor N-MOS ($Q4$), et les diodes ont des électrodes positives connectées aux sources et ont des électrodes négatives connectées aux drains.

FIG. 1

FIG. 2

FIG. 3

EP 3 223 417 B1

**REFERENCES CITED IN THE DESCRIPTION**

**Patent documents cited in the description**

- CN 103199704 A